# EUROPEAN PATENT SPECIFICATION

(11) **EP 1 345 665 B1**
(45) Date of publication and mention of the grant of the patent: **28.06.2006**
(21) Application number: 00985599.0
(22) Date of filing: 18.12.2000
(51) Int. Cl.: B01D 11/04

(54) **APPARATUS AND METHOD FOR EXTRACTING BIOMASS**
APPARAT UND METHODE ZUM EXTRAHIEREN VON BIOMASSE
DISPOSITIF ET PROCEDE SERVANT A EXTRAIRE UNE BIOMASSE

(43) Date of publication of application: 24.09.2003
(73) Proprietor: Ineos Fluor Holdings Limited, Southampton, Hampshire SO14 3BP (GB)
(72) Inventor: LOW, Robert, Elliot, Northwich, Cheshire CW9 8AD (GB)
(74) Representative: Powell, Timothy John
(86) International application number: PCT/GB2000/004850
(87) International publication number: WO 2002/049736

(56) References cited:
- EP-A- 0 719 854
- WO-A-91/14373
- K.HÖFLMANN ET AL.: CHEMIE-INGENIEUR-TECHNIK, vol. 65, no. 12, December 1993 (1993-12), pages 1510-1514, XP000415095 Weinheim,DE

## Description

This invention concerns apparatuses and a method for "extraction" of biomass. This is the extraction of flavours, fragrances or pharmaceutically active ingredients from materials of natural origin (these materials being referred to as "biomass" herein).

Examples of biomass materials include but are not limited to flavoursome or aromatic substances such as coriander, cloves, star anise, coffee, orange juice, fennel seeds, cumin, ginger and other kinds of bark, leaves, flowers, fruit, roots, rhizomes and seeds. Biomass may also be extracted in the form of biologically active substances such as pesticides and pharmaceutically active substances or precursors thereto, obtainable e.g. from plant material, a cell culture or a fermentation broth.

There is growing technical and commercial interest in using near-critical solvents in such extraction processes. Examples of such solvents include liquefied carbon dioxide or, of particular interest, a family of chlorine-free solvents based on organic hydrofluorocarbon ("HFC") species.

By the term "hydrofluorocarbon" we are referring to materials which contain carbon, hydrogen and fluorine atoms only and which are thus chlorine-free.

Preferred hydrofluorocarbons are the hydrofluoroalkanes and particularly the C₁₋₄ hydrofluoroalkanes. Suitable examples of C₁₋₄ hydrofluoroalkanes which may be used as solvents include, inter alia, trifluoromethane (R-23), fluoromethane (R-41), difluoromethane (R-32), pentafluoroethane (R-125), 1,1,1-trifluoroethane (R-143a), 1,1,2,2-tetrafluoroethane (R-134), 1,1,1,2-tetrafluoroethane (R-134a), 1,1-difluoroethane (R-152a), 1,1,1,2,3,3-hexafluoropropane (R-236ea), 1,1,1,2,2,3-hexafluoropropane (R-236cb), 1,1,1,3,3,3-hexafluoropropane (R-236fa), 1,1,1,3,3-pentafluoropropane (R-245fa), 1,1,2,2,3-pentafluoropropane (R-245ca), 1,1,1,2,3-pentafluoropropane (R-245eb), 1,1,2,3,3-pentafluoropropane (R-245ea) and 1,1,1,3,3-pentafluorobutane (R-365mfc). Mixtures of two or more hydrofluorocarbons may be used if desired.

An especially preferred hydrofluorocarbon for use in the present invention is 1,1,1,2-tetrafluoroethane (R-134a).

It is possible to carry out biomass extraction using other solvents, such as chlorofluorocarbon ("CFC's") or hydrochlorofluorocarbons ("HCFC's") and/or mixtures of solvents.

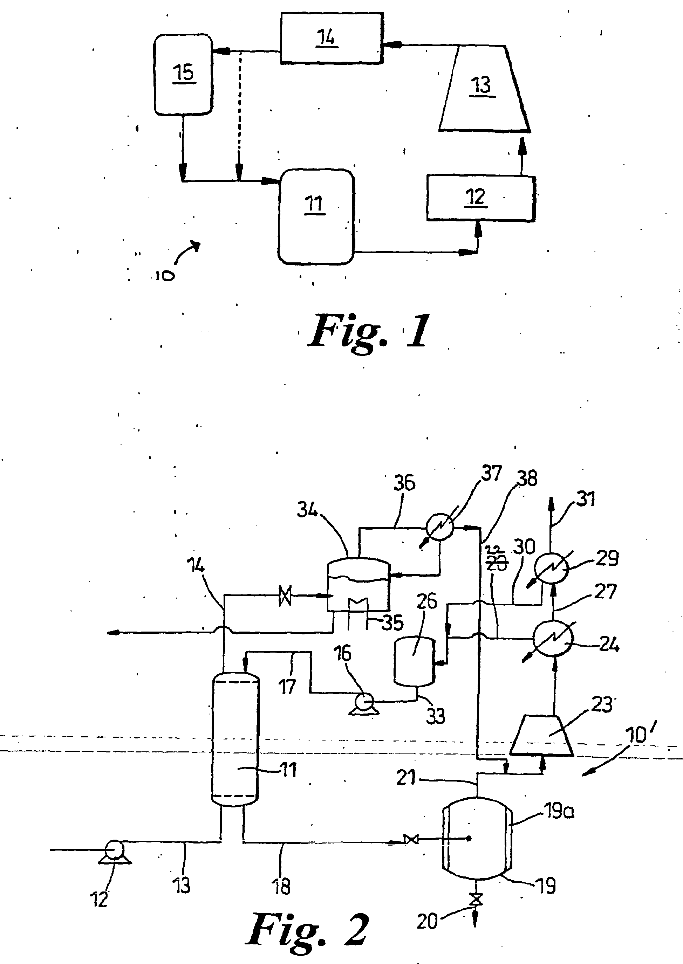

Known extraction processes using these solvents are normally carried out in closed-loop extraction equipment. A typical example 10 of such a system is shown schematically in Figure 1.

In this typical system, liquefied solvent is allowed to percolate by gravity in downflow through a bed of biomass held in vessel 11. Thence it flows to evaporator 12 where the volatile solvent vapour is vaporised by heat exchange with a hot fluid. The vapour from evaporator 12 is then compressed by compressor 13: the compressed vapour is next fed to a condenser 14 where it is liquefied by heat exchange with a cold fluid. The liquefied solvent is then optionally collected in intermediate storage vessel (receiver) 15 or returned directly to the extraction vessel 1 to complete the circuit.

There are particular problems when the biomass is a liquid (typically aqueous) form. Examples of liquid biomasses include, but are not limited to, coffee and orange juice. Liquids containing solid biomass particles present similar difficulties. We refer to such biomasses herein as "liquid entrained" biomasses.

Hydrofluorocarbon (HFC) solvents have been found to be effective in extracting such biomasses. An example of a suitable HFC solvent is 1,1,1,2-tetrafluoroethane, sold as "R-134a" by Iness Fluor Limited. It would be desirable to provide an apparatus and method capable of continuous extraction of liquid or liquid entrained biomass using e.g. 1,1,1,2-tetraffuoroethane in liquid form.

According to a first aspect of the invention there is provided apparatus according to Claim 1.

This apparatus advantageously allows intimate mingling of the biomass and the solvent so that the solvent efficiently strips the desirable components from the biomass and entrains them to a further location for separation of the solvent and biomass from one another.

The use of countercurrent flows as defined in Claim 1 makes the apparatus suitable for the continuous processing of liquid or liquid-entrained biomass.

The features of the rectifier, compressor and condenser in series advantageously separate the desired biomass extract from the solvent, whereby the extract is available for further use.

In preferred embodiments the condenser is as defined in Claim 1. This is because there are sometimes residual inerts (air, carbon dioxide, etc) in the aqueous feed stream of biomass. The solvent entrains some of these inert compounds to the condenser. Condensation in the presence of inerts is sometimes difficult. The second condenser stage defined in Claim 1 advantageously separates inerts from the solvent.

The second condenser stage operates at a lower temperature than the first stage. This removes heat from the solvent/inert compound mixture.

The feature of Claim 2 advantageously allows recycling of recovered solvent for contact with further biomass.

Even using a two-stage condenser, some uncondensed vapours may remain. Therefore the second condenser stage advantageously includes a vent for venting uncondensed vapours therefrom.

Preferably the vent is connected to an adsorbent filter that adsorbs solvent in the vented vapour. This advantageously recovers yet more of the solvent.

An example of a suitable adsorbent filter is a bed of activated carbon.

The rectifier (still) defined in Claim 1 may advantageously have the features defined in Claim 5.

Conveniently the still includes a vent and a reflux condenser forming part of the vapour path to the vent. In a preferred embodiment the reflux condenser operates at a higher temperature than the solvent dewpoint and at a lower temperature than the biomass extract dewpoint. Consequently the reflux condenser recondenses any biomass fragrance compounds which undesirably distil from the still as a result of the heating mentioned in Claim 5.

The countercurrent flow established in the hollow vessel entrains some solvent with the liquid biomass. Consequently the hollow vessel includes the features of Claim 7. These advantageously permit recovery of solvent from the depleted biomass.

As noted in Claim 7, solvent recovered from the depleted biomass may be recycled into the main solvent closed loop for further contact with biomass.

The check tank defined in Claim 7 includes an outlet for liquid biomass residue. The biomass residue may, if necessary, undergo further solvent decontamination. It may then be suitable for e.g. animal feeds and landfill operations.

In particularly preferred embodiments the hollow vessel is an upright, elongate vessel through which a biomass stream rises and a solvent stream descends.

An alternative arrangement is one in which the hollow vessel is or includes a mixer-settler unit in which solvent and biomass streams flow in countercurrent.

In practice, there may be a series of mixer-settler units connected in series to define a multi-stage hollow vessel or a plurality of vessels.

Another arrangement is one in which a high intensity mixing device, e.g. a static mixer or inline jet spray mixer, is used to effect the contact and promote mass transfer. Typically such an arrangement could use a gravity setting tank, advantageously however an enhanced separation technology could be used. Examples of high intensity separation technologies include hydrocyclones or centrifugal separators, through which the working liquid, having acquired kinetic energy, may be passed. Various devices such as pumps may be used to impart kinetic energy to the working liquid.

The advantages of using e.g. an inline static mixer coupled with a hydrocyclone (or set of hydrocyclones arranged as desired) are that the inventory of solvent in the system can be reduced, and that the size of the extraction plant can be reduced to a bubble column and gravity settler. In addition the use of high intensity mixers reduces the potential for bypassing/short circuit flow of one of the phases, which could occur in a bubble type contactor.

According to a second aspect of the invention there is provided a method as defined in Claim 12.

This method is advantageously effective in extracting biomass in liquid (typically aqueous) form.

It is particularly preferable that the method of Claim 12 be carried out in a closed loop circuit. This permits efficient recovery of solvent, whose disposal would otherwise present problems.

Further, advantageous features of the method, that permit efficient recovery of solvent following practising of the method, are defined in Claims 14 and 15.

The method also advantageously includes the steps defined in Claims 16 and 17 that permit recovery of solvent from the depleted biomass.

In particular when practising the method using the apparatus as defined herein, it is advantageous that one of the countercurrent flows occurs under gravity. This reduces the energy consumption of the apparatus.

Alternatively when practising the method using high intensity mixing and separation technologies, gravity may be used at the designer's choice ; however the technology need not rely on use of gravity to separate the liquid. In this case (where gravity is not used to drive flow) the energy consumption may be higher (because of the pumping work used) but as the equipment will in general be much smaller there will normally still be an economic benefit.

There now follows a description of the preferred embodiment of the invention, by way of non-limiting example, with reference being made to the accompanying drawings in which :
Figure 1 is a schematic representation of a known biomass extraction apparatus, that is suitable for extracting biomass that is initially in solid form; and
Figure 2 is a schematic representation of an apparatus according to the invention.

Referring to Figure 2 there is shown an apparatus 10' for extracting biomass.

Apparatus 10 includes as its primary converter an extraction vessel 11 that is in the preferred embodiment an elongate, upright cylinder.

Liquid biomass such as concentrated orange juice, coffee in aqueous form, etc is supplied by a pump 12 and supply line 13 to the interior of the base of vessel 11. As a result of pressure from the pump 12 the liquid biomass rises through the vessel 11, that is filled with liquid, and exits via a biomass outlet line 14 at the top of the vessel.

Solvent is supplied under the pressure of a pump 16 via a line 17 to the interior of the top of the vessel 11. The solvent falls under gravity through the vessel 11, and emerges via solvent/biomass extract outlet line 18 at the base of the vessel 11. The solvent/biomass extract mixture is then treated in a closed loop circuit whereby to separate the solvent and the extract from one another. The solvent is then recycled by line 17 for contact with further biomass in vessel 11.

A suitable solvent is R-134a. This has physical properties that are well suited for the extraction of biomass. R134a is also approved for use in food applications.

Other solvents, including CFC's and HCFC's may also be employed, although these solvents are not approved for the extraction of biomass that has an ultimate food or medicinal use.

Mixtures of solvents may of course be employed.

The solvent/biomass extract mixture exiting via outlet line 18 passes to a rectifier in the form of still 19.

Still 19 includes e.g. a heating jacket 19a or other, functionally equivalent, means for heating the solvent/extract mixture that is supplied thereto by line 18.

The heating action causes evaporation of the solvent, whose dewpoint is significantly lower than that of the biomass extract.

Evaporated solvent passes to a compressor/condenser portion of the circuit described in detail below.

The liquid biomass extract is, following evaporation of all the solvent in the mixture in the still 19, drained via biomass extract drain line 20 for further commercial use.

Still 19 may optionally include a reflux condenser (not visible in Figure 2) adjacent its solvent vapour outlet line 21. The purpose of the reflux condenser is to condense any volatile fractions of the biomass extract that are inadvertently entrained with the solvent vapour as it exits the still 19. Thus all desired components of the biomass extract are retained in the still 19 for subsequent draining via line 20. The undesirable solvent components pass via line 21 to the compressor/condenser portion of the circuit.

Line 21 is connected to the suction side of a compressor 23. This operates at a duty sufficient to compress the solvent vapour to allow its subsequent condensation.

The outlet of compressor 23 is connected to a first condenser stage 24.

The bulk of the solvent vapour condenses in condenser 24 and passes via line 22 to a hollow vessel 26 that acts as a solvent receiver.

In order to reduce the energy consumption of the process it may be desirable to use heat integration technology. In one such embodiment the vaporised, compressed solvent gas can be condensed directly as the heating medium in still jacket 19a, thus providing heating and cooling as required by still 19 and condenser 24. In an alternative embodiment the vapour can be condensed against a secondary heat transfer fluid (refrigerant) which operates in a closed heat pump (not shown in the drawings), whose output of heat drives still heating jacket 19a.

As noted above, some inert compounds such as air and carbon dioxide are present in the aqueous feed stream supplied via line 13. The inert compounds tend to entrain solvent. A vapour outlet 27 from condenser 24 is therefore connected to the inlet of a second condenser stage 29. This operates at lower temperature than condenser stage 24, to condense solvent in the presence of the inert compounds.

A liquid outlet 30 passes the thus condensed solvent portion to the receiver 26.

A vapour outlet 31 of condenser 29 allows the egress of gaseous components that do not condense in condenser 29. Such gaseous components may if desired be passed to e.g. an adsorbent bed for further stripping of solvent molecules therefrom. Thereafter the cleaned vapour components, including e.g. carbon dioxide and air, may be safely vented without risk of solvent contamination outside the closed loop of the apparatus.

Receiver 26 includes a liquid solvent outlet 33 that is connected to the suction side of pump 16, for recycling the thus cleaned solvent into the vessel 11.

Liquid outlet line 14 for depleted biomass is connected to an aqueous product check tank 34. Tank 34 includes a heater element 35 for heating of the liquid content thereof.

There is a vapour outlet line 36 at the top of vessel 34. Line 36 is, via a condenser 37, connected to the suction side of compressor 23. The gentle heating from the heating element 35 causes dissolved solvent to evaporate from vessel 34. Condenser 37 is optionally included to allow condensation of any extract or water which is also vaporised; however the condensation temperature is scheduled such that it is above the solvent dewpoint.

Condensate from this condenser drains back to tank 34. Uncondensed vapour is passed via line 3 8 to the compressor.

If desired a heat pump may be used to integrate the functions of heater 35 and condenser 37. In this case an external heat transfer fluid is used in either a compression or absorption cycle to supply heating and cooling as desired.

In use of the apparatus stripping of biomass extract from the aqueous feed in vessel 11 occurs continuously, and recovery and recycling of solvent also occurs on a continuous basis.

The plant may include suitable control apparatus such as a microprocessor for switching the various components such as the pumps 12 and 16 and the compressor 23, together with the heating jacket 19a and the heater element 35. Alternatively, manually operated controls may be included.

A bubble column extractor as exemplified by vessel 11 is a good way of effecting gentle extraction. Alternative methods of contacting could be: a train of mixer-settler units with the solvent and process stream flowing in countercurrent, or a high-intensity static mixer followed by either a gravity settler or a hydrocyclone system.

A particular advantage of a high intensity static mixer and either a gravity settler or a hydrocyclone system is that the size of the solvent inventory can be significantly reduced. As disclosed herinabove the advantages of high intensity mixing are: small equipment size, and low inventory of solvent.

This offers benefits in both overall plant size and in the cost of solvent for the system.

## Claims

1. Apparatus (10') for extracting biomass from a liquid biomass supply, the apparatus comprising :
a hollow vessel (11) containing a liquid, liquid or liquid-entrained biomass being supplied at or near a first side of the vessel and a liquid solvent being supplied at or near a second, opposite side of the vessel such that a stream of solvent passes in one direction through the vessel and a stream of biomass passes as a countercurrent through the vessel, such that biomass extract leaves the vessel with the solvent;
an outlet (14) for biomass at or near the second side of the vessel (11);
an outlet (18) for solvent/extract mixture at or near the first side of the vessel (11); and
a separator, connected to the solvent/extract outlet (18), for separating solvent and extract from one another, **characterised in that** the separator includes a condenser having first (24) and second (29) condenser stages connected in series, the second condenser stage (29) operating at a lower temperature than the first stage and both condensers supplying substantially uncontaminated solvent to a hollow vessel (26); and **in that** the separator includes a rectifier (19), for rectifying the solvent and separating therefrom the extract; a compressor (23); and the condenser, connected in series, whereby the separator generates substantially uncontaminated solvent in liquid form.

2. Apparatus according to Claim 1 including pipework (22,30) for supplying at least some of the substantially uncontaminated solvent from the condenser to the hollow vessel (26) in a substantially closed loop circuit (16,17,11,18,19,21,23,24,27,29,22,30,26) that includes the said vessel (26).

3. Apparatus according to any preceding claim wherein the second condenser stage (29) includes a vent (31) for venting uncondensed vapour therefrom.

4. Apparatus according to Claim 3 wherein the vent (31) is connected to an adsorbent filter that adsorbs solvent in the vented vapour.

5. Apparatus according to any preceding claim wherein the rectifier (19) includes a still connected to the solvent/extract outlet (18) of the hollow vessel, the still including :
i. a heater (19a) for heating any solvent/extract mixture therein to a higher temperature than the solvent dewpoint;
ii. an outlet (21), for solvent in vapour form, connected to supply such solvent to the suction side of the compressor (23); and
iii. a drain (20) for extract in liquid form.

6. Apparatus according to Claim 5 including a vent and a reflux condenser forming part of the vapour path to the vent, the reflux condenser operating at a higher temperature than the solvent dewpoint and at a lower temperature than the biomass extract dewpoint.

7. Apparatus according to any preceding claim, wherein the biomass outlet (14) of the hollow vessel (11) is connected in series to :
i. a heatable check tank (34); and thence to
ii. a further condenser (37) for condensing solvent vaporised on heating of the check tank (34);
the further condenser (37) including an outlet for condensed solvent, the outlet being connected to supply solvent condensed in the further condenser to the heatable check tank (34).

8. Apparatus according to Claim 7 wherein the check tank (34) includes an outlet for liquid biomass.

9. Apparatus according to any preceding claim wherein the hollow vessel (11) is or includes an upright, elongate vessel through which a biomass stream rises and a solvent stream descends.

10. Apparatus according to any of Claims 1 to 8 wherein the hollow vessel (11) is or includes a mixer-settler unit in which solvent and biomass streams flow in countercurrent.

11. Apparatus according to any of Claims 1 to 8 wherein the hollow vessel (11) is or includes a high intensity mixer.

12. A method of extracting biomass, using apparatus according to any preceding claim, wherein the biomass is in liquid or liquid-entrained form, the method comprising:
i. in the hollow vessel (11) containing liquid, establishing countercurrent flows of liquid solvent and the said biomass so that the solvent strips extract from the biomass;
ii. passing liquid solvent containing extracted biomass to the separator;
iii. evaporating solvent from the extract in the separator;
iv. draining biomass extract from the separator;
v. passing the solvent in vapour form to the condensor (24,29);
vi. condensing the solvent in a two stage condensation and returning it to the hollow vessel (11).

13. A method according to Claim 12 when carried out in a closed loop circuit (16,17,11,18,19,21,23,24,27,29,22,30,26).

14. A method according to Claim 12 or Claim 13 wherein the step of condensing the solvent includes the sub-steps of compressing the solvent in vapour form; and condensing the solvent.

15. A method according to any of Claims 12 to 14 including the steps of passing depleted biomass to a further separator (34); and separating further solvent from the biomass in the further separator (34).

16. A method according to any of Claims 12 to 15 wherein one of the countercurrent flows occurs under gravity.

17. A method according to any of Claims 12 to 16 including the step of imparting kinetic energy to liquid and passing it through a high-intensity mixer.

## Patentansprüche

1. Apparatur (10') zum Extrahieren von Biomasse aus einem flüssigen Biomasse-Einsatzprodukt, wobei die Apparatur aufweist:
einen Hohlbehälter (11), der eine Flüssigkeit enthält, wobei eine flüssige oder mit Flüssigkeit geförderte Biomasse an oder in der Nähe einer ersten Seite des Behälters zugeführt wird und ein flüssiges Lösemittel an oder in der Nähe einer zweiten, gegenüberliegenden Seite des Behälters so zugeführt wird, dass ein Lösemittelstrom in einer Richtung durch den Behälter strömt und ein Biomassestrom als Gegenstrom durch den Behälter strömt, so dass der Biomasseextrakt den Behälter mit dem Lösemittel verläßt;
einen Auslass (14) für Biomasse an oder in der Nähe der zweiten Seite des Behälters (11);
einen Auslass (18) für eine Lösemittel/Extraktmischung an oder in der Nähe der ersten Seite des Behälters (11); und
einen Abscheider, der mit dem Lösemittel/Extrakt-Auslass (18) verbunden ist, um Lösemittel und Extrakt voneinander zu trennen, **dadurch gekennzeichnet, dass** der Abscheider einen Kondensator mit einer ersten (24) und einer zweiten (29) Kondensatorstufe beinhaltet, die in Reihe miteinander verbunden sind, wobei die zweite Kondensatorstufe (29) bei einer niedrigeren Temperatur arbeitet als die erste Stufe und beide Kondensatoren an einen Hohlbehälter (26) ein im Wesentlichen unkontaminiertes Lösemittel liefern; und dass der Abscheider einen Rektifikator (19) zur Rektifikation des Lösemittels und zum Abtrennen des Extrakts daraus; einen Kompressor (23) sowie den Kondensator, die in Reihe miteinander verbunden sind, beinhaltet, wodurch der Abscheider ein im Wesentlichen unkontaminiertes Lösemittel in flüssiger Form erzeugt.

2. Apparatur nach Anspruch 1, die Rohrleitungen (22, 30) zur Zuführung von wenigstens etwas von dem im Wesentlichen unkontaminierten Lösemittel aus dem Kondensator in den Hohlbehälter (26) in einem im Wesentlichen geschlossenen Kreislauf (16, 17, 11, 18, 19, 21, 23, 24, 27, 29, 22, 30, 26), der den Behälter (26) einschließt, aufweist.

3. Apparatur nach irgendeinem vorausgehenden Anspruch, wobei die zweite Kondensatorstufe (29) eine Entlüftung (31) zum Ablassen von unkondensiertem Dampf beinhaltet.

4. Apparatur nach Anspruch 3, wobei die Entlüftung (31) mit einem Adsorbensfilter verbunden ist, der Lösemittel in dem abgelassenen Dampf adsorbiert.

5. Apparatur nach irgendeinem vorausgehenden Anspruch, wobei der Rektifikator (19) eine Destillationsvorrichtung beinhaltet, die mit dem Lösemittel/Extraktauslass (18) des Hohlbehälters verbunden ist, wobei die Destillationsvorrichtung einschließt:
i. einen Erhitzer (19a) zum Erhitzen der Lösemittel/Extraktmischung darin auf eine höhere Temperatur als der Lösemittel-Taupunkt;
ii. einen Auslass (21) für Lösemittel in Dampfform, der so verbunden ist, dass er ein derartiges Lösemittel saugseitig dem Kompressor (23) zuführt; und
iii. einen Ablass (20) für den Extrakt in flüssiger Form.

6. Apparatur nach Anspruch 5, die eine Entlüftung und einen Rückflusskondensator beinhaltet, der einen Teil des Dampfwegs zu der Entlüftung bildet, wobei der Rückflusskondensator bei einer höheren Temperatur arbeitet als der Taupunkt des Lösemittels und bei einer niedrigeren Temperatur als der Taupunkt des Biomasseextrakts.

7. Apparatur nach irgendeinem vorausgehenden Anspruch, wobei der Biomasseauslass (14) des Hohlbehälters (11) in Reihe verbunden ist mit:
i. einem heizbaren Check-Tank (34); und danach
ii. einem weiteren Kondensator (37) zum Kondensieren von Lösemittel, das durch Erhitzen des Check-Tanks (34) verdampft wurde;
wobei der weitere Kondensator (37) einen Auslass für kondensiertes Lösemittel beinhaltet, wobei der Auslass so geschaltet ist, dass Lösemittel, das in dem weiteren Kondensator kondensiert wurde, dem heizbaren Check-Tank (34) zugeführt wird.

8. Apparatur nach Anspruch 7, wobei der Check-Tank (34) einen Auslass für flüssige Biomasse beinhaltet.

9. Apparatur nach irgendeinem vorausgehenden Anspruch, wobei der Hohlbehälter (11) ein stehender, langgestreckter Behälter ist oder einen solchen einschließt, durch den ein Biomassestrom aufsteigt und ein Lösemittelstrom absteigt.

10. Apparatur nach irgendeinem der Ansprüche 1 bis 8, wobei der Hohlbehälter (11) eine Mischer-Absetzeinheit ist oder eine solche beinhaltet, in der Lösemittel- und Biomasseströme im Gegenstrom strömen.

11. Apparatur nach irgendeinem der Ansprüche 1 bis 8, wobei der Hohlbehälter (11) ein Hochintensitätsmischer ist oder einen solchen beinhaltet.

12. Verfahren zum Extrahieren von Biomasse unter Verwendung einer Apparatur nach irgendeinem vorausgehenden Anspruch, wobei die Biomasse in flüssiger oder flüssigkeitsgeförderter Form vorliegt, wobei das Verfahren umfasst:
i. Etablieren von Gegenströmen aus flüssigem Lösemittel und der Biomasse in dem Hohlbehälter auf eine Weise, dass das Lösemittel Extrakt aus der Biomasse abzieht;
ii. Weiterleiten des flüssigen Lösemittels, das extrahierte Biomasse enthält, zu dem Abscheider;
iii. Verdampfen von Lösemittel aus dem Extrakt im Abscheider;
iv. Ablassen von Biomasseextrakt aus dem Abscheider;
v. Weiterleiten des Lösemittels in Dampfform zu dem Kondensator (24, 29);
vi. Kondensieren des Lösemittels in einer zweistufigen Kondensation und seine Rückführung in den Hohlbehälter (11).

13. Verfahren nach Anspruch 12, wenn es in einem geschlossenen Kreislauf (16, 17, 11, 18, 19, 21, 23, 24, 27, 29, 22, 30, 26) durchgeführt wird.

14. Verfahren nach Anspruch 12 oder Anspruch 13, wobei die Stufe des Kondensierens des Lösemittels die Unterstufen der Komprimierung des Lösemittels in Dampfform und des Kondensierens des Lösemittels beinhaltet.

15. Verfahren nach irgendeinem der Ansprüche 12 bis 14, das die Stufen einer Zuführung einer abgereicherten Biomasse zu einem weiteren Abscheider (34) und das Abtrennen von weiterem Lösemittel aus der Biomasse in dem weiteren Abscheider (34) beinhaltet.

16. Verfahren nach irgendeinem der Ansprüche 12 bis 15, wobei einer der Gegenströme unter Schwerkrafteinfluss strömt.

17. Verfahren nach irgendeinem der Ansprüche 12 bis 16, das die Stufe der Zuführung von kinetischer Energie zu der Flüssigkeit und deren Durchleiten durch einen Hochintensitätsmischer beinhaltet.

## Revendications

1. Dispositif (10') pour extraire une biomasse à partir d'un apport de biomasse liquide, le dispositif comprenant :
un récipient creux (11) contenant un liquide, la biomasse liquide ou entraînée par un liquide étant délivrée au niveau ou à proximité d'un premier côté du récipient et un solvant liquide étant délivré au niveau ou à proximité d'un deuxième côté opposé du récipient de telle sorte qu'un courant de solvant traverse le récipient dans une direction et qu'un courant de biomasse traverse le récipient à contre-courant, afin que l'extrait de biomasse quitte le récipient avec le solvant ;
une sortie (14) pour la biomasse au niveau ou à proximité du deuxième côté du récipient (11) ;
une sortie (18) pour le mélange de solvant/extrait au niveau ou à proximité du premier côté du récipient (11) ; et
un séparateur, connecté à la sortie de solvant/extrait (18), pour séparer le solvant et l'extrait l'un de l'autre, **caractérisé en ce que** le séparateur comprend un condenseur ayant des premier (24) et deuxième (29) étages de condenseur connectés en série, le deuxième étage de condenseur (29) opérant à une température inférieure à celle du premier étage et les deux condenseurs délivrant du solvant pratiquement non contaminé à un récipient creux (26) ; et **en ce que** le séparateur comprend un rectificateur (19), pour rectifier le solvant et le séparer de l'extrait ; un compresseur (23) ; et le condenseur, connectés en série, en conséquence de quoi le séparateur génère du solvant pratiquement non contaminé sous forme liquide.

2. Dispositif selon la revendication 1, comprenant une canalisation (22, 30) pour délivrer au moins une partie du solvant pratiquement non contaminé à partir du condenseur vers le récipient creux (26) dans un circuit en boucle pratiquement fermée (16, 17, 11, 18, 19, 21, 23, 24, 27, 29, 22, 30, 26) qui comprend ledit récipient (26).

3. Dispositif selon l'une quelconque des revendications précédentes, dans lequel le deuxième étage de condenseur (29) comprend une évacuation (31) pour évacuer la vapeur non condensée provenant de celui-ci.

4. Dispositif selon la revendication 3, dans lequel l'évacuation (31) est connectée à un filtre adsorbant qui adsorbe le solvant dans la vapeur évacuée.

5. Dispositif selon l'une quelconque des revendications précédentes, dans lequel le rectificateur (19) comprend un alambic connecté à la sortie de solvant/extrait (18) du récipient creux, l'alambic comprenant :
i. un réchauffeur (19a) pour chauffer tout mélange de solvant/extrait s'y trouvant à une température supérieure au point de rosée du solvant ;
ii. une sortie (21), pour le solvant sous forme vapeur, connectée pour délivrer ce solvant au côté d'aspiration du compresseur (23) ; et
iii. un drain (20) pour l'extrait sous forme liquide.

6. Dispositif selon la revendication 5, comprenant une évacuation et un condenseur à reflux formant une partie du trajet de vapeur vers l'évacuation, le condenseur à reflux opérant à une température supérieure au point de rosée du solvant et à une température inférieure au point de rosée de l'extrait de biomasse.

7. Dispositif selon l'une quelconque des revendications précédentes, dans lequel la sortie de biomasse (14) du récipient creux (11) est connectée en série à :
i. un réservoir de retenue chauffable (34) ; et ensuite à
ii. un autre condenseur (37) pour condenser le solvant vaporisé lors du chauffage du réservoir de retenue (34) ;
l'autre condenseur (37) comprenant une sortie pour le solvant condensé, la sortie étant connectée de façon à délivrer le solvant condensé dans l'autre condenseur vers le réservoir de retenue chauffable (34).

8. Dispositif selon la revendication 7, dans lequel le réservoir de retenue (34) comprend une sortie pour la biomasse liquide.

9. Dispositif selon l'une quelconque des revendications précédentes, dans lequel le récipient creux (11) est ou comprend un récipient vertical allongé au travers duquel un courant de biomasse monte et un courant de solvant descend.

10. Dispositif selon l'une quelconque des revendications 1 à 8, dans lequel le récipient creux (11) est ou comprend une unité de mélange-décantation dans laquelle les courants de solvant et de biomasse circulent à contre-courant.

11. Dispositif selon l'une quelconque des revendications 1 à 8, dans lequel le récipient creux (11) est ou comprend un mélangeur de forte intensité.

12. Procédé pour extraire une biomasse, utilisant un dispositif selon l'une quelconque des revendications précédentes, dans lequel la biomasse est sous forme liquide ou entraînée par un liquide, le procédé comprenant :
i. dans le récipient creux (11) contenant un liquide, l'établissement de circulations à contre-courant de solvant liquide et de ladite biomasse de façon que le solvant extraie l'extrait à partir de la biomasse ;
ii. le passage de solvant liquide contenant la biomasse extraite vers le séparateur ;
iii. l'évaporation du solvant de l'extrait dans le séparateur ;
iv. le drainage de l'extrait de biomasse à partir du séparateur ;
v. le passage du solvant sous forme vapeur vers le condenseur (24, 29) ;
vi. la condensation du solvant par une condensation à deux étages et son renvoi vers le récipient creux (11).

13. Procédé selon la revendication 12, lorsqu'il est mis en oeuvre dans un circuit en boucle fermée (16, 17, 11, 18, 19, 21, 23, 24, 27, 29, 22, 30, 26).

14. Procédé selon la revendication 12 ou la revendication 13, dans lequel l'étape de condensation du solvant comprend les sous-étapes de compression du solvant sous forme vapeur ; et de condensation du solvant.

15. Procédé selon l'une quelconque des revendications 12 à 14, comprenant les étapes de passage de la biomasse appauvrie dans un autre séparateur (34) ; et la séparation de solvant supplémentaire à partir de la biomasse dans l'autre séparateur (34).

16. Procédé selon l'une quelconque des revendications 12 à 15, dans lequel l'une des circulations à contre-courant se produit sous l'effet de la gravité.

17. Procédé selon l'une quelconque des revendications 12 à 16, comprenant l'étape consistant à conférer une énergie cinétique au liquide et à faire passer celui-ci dans un mélangeur de forte intensité.
